# EUROPEAN PATENT APPLICATION

(11) **EP 4 009 684 A1**
(43) Date of publication of application: **08.06.2022**
(21) Application number: 21162362.4
(22) Date of filing: 12.03.2021
(51) Int. Cl.: H04W 12/08

(54) **SYSTEM AND METHOD FOR SIM CARD SHARING IN LOCAL AREA NETWORKS**

(30) Priority: 04.12.2020 EP 20211979
(71) Applicant: Shenzhen Goodix Technology Co., Ltd., Shenzhen, Guangdong 518045 (CN)
(72) Inventor: Scheffel, Robert, 01069 Dresden (DE); von Borany, Andreas, 01768 Glashütte (DE); Fröhlich, Martin, 01099 Dresden (DE)
(74) Representative: Lippert Stachow Patentanwälte Rechtsanwälte Partnerschaft mbB

(57) **Abstract**

The invention discloses a system forming a local area network (LAN) which comprises a plurality of user equipment (UEs) and a method for SIM card sharing in a local area network, which is performed by the inventive system. The objective of the invention to further reduce the cost per UE in a local area network will be solved by a system, where only one UE of the plurality of UEs comprises or a few UEs of the plurality of UEs comprise a SIM card connected to the respective UE via a wired serial interface and the plurality of UEs are interconnected via a local area connection technology, wherein only one active connection at the same time is establishable for each SIM card, which is ensured by a SIM card sharing protocol, wherein the SIM card sharing protocol forwards application protocol data units (APDUs) from the UE that contains the SIM card to a UE that requires a SIM card to attach to a base station of a cellular network. (Fig. 2)

## Description

The invention relates to a system forming a local area network (LAN) which comprises a plurality of user equipment (UEs) and a method for SIM card sharing in a local area network, which is performed by the inventive system.

All 3GPP based cellular user equipment (UE), such as mobile phones but also Internet of Things (IoT) devices, require a mechanism to prove their identity against the cellular network and to exchange keys for a secure connection.

Therefore, the Universal Integrated Circuit Card (UICC - the hardware), with a USIM application (the software) running on it, is used. The UICC is a high secure hardware module that is connected (wired) to the UE. The USIM application contains all secret keys and provider specific information. The USIM application is provisioned by the cellular operator.

The secret keys inside the USIM application stored on the UICC must not be read out. The keys are used to authenticate the UE against the core network with the help of a cryptographic algorithm. Furthermore, the USIM application generates the secret session keys for the UE.

Thus, each UE requires a USIM application (running on the UICC) to attach to a core network successfully. Adding provider keys and provider specific setting (profile) is called provisioning.

The modem to UICC communication is done via wired serial interface which is standardized in ISO/IEC 7816-3.

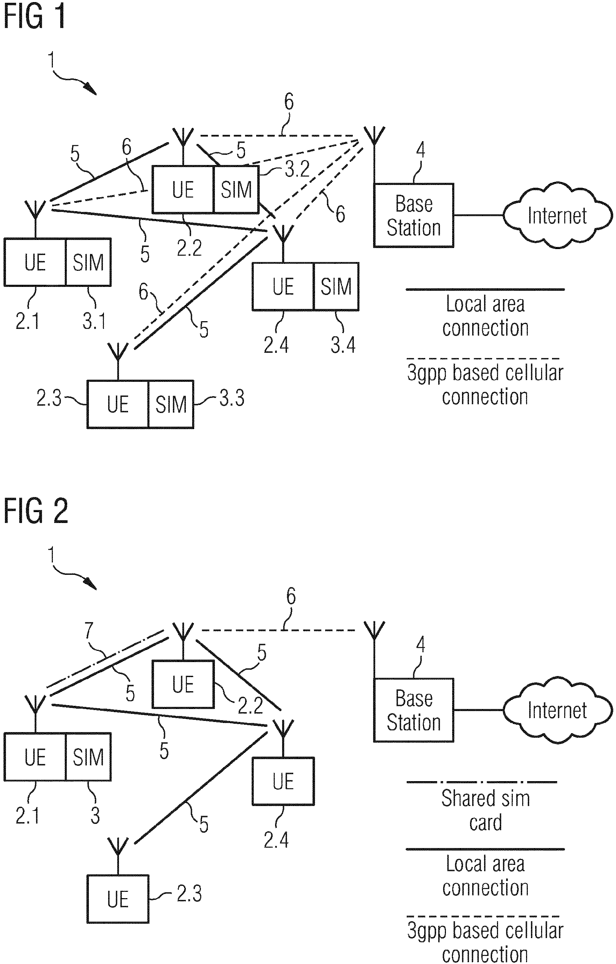

Local area networks with multiple devices require a UICC (SIM) for each UE. This is exemplary shown in figure 1. Every UE 2.1 to 2.4 communicating with a base station 4 comprises a SIM 3.1 to 3.4. The UEs 2.1 to 2.4 communicate over 3GPP base cellular connection 6 with the base station 4, the connections are presented in dashed lines. The UEs 2.1 to 2.4 which communicate among each other over a local area connection 5 form a local area network 1. The local area connections are presented by solid lines. Local area connection technologies can be wired or wireless, like IEEE-802.3 (Ethernet), IEEE-802.11 (WiFi), IEEE-802.15.4 (WPAN) or BT/BLE (Bluetooth, Bluetooth Low Energy).

The disadvantage of a UICC is that a separated secure hardware element, a SIM card 3, is required for each UE. This causes additional system costs.

The objective of the invention is to further reduce the cost per UE in a local area network.

The object of the invention will be solved by a system forming a local area network which comprises a plurality of user equipment (UEs), whereas only one UE of the plurality of UEs comprises or a few UEs of the plurality of UEs comprise a SIM card connected to the respective UE via a wired serial interface and the plurality of UEs are interconnected via a local area connection technology, wherein only one active connection at the same time is establishable for each SIM card, which is ensured by a SIM card sharing protocol, wherein the SIM card sharing protocol forwards application protocol data units (APDUs) via a logical shared SIM card connection from the UE that contains the SIM card to a UE that requires a SIM card to attach via a network connection to a base station of a cellular network.

The idea of the present invention is to have only one or a few SIM cards available inside a local area network (LAN), whereas the LAN comprises multiple UEs (much more than only one or a few UEs) with the possibility of 3gpp based cellular connection technology. The UEs are interconnected via a local area connection technology.

The SIM card is connected via a wired serial interface (standardized in ISO/IEC 7816-3).

The number of available SIM cards limits the number of concurrent 3gpp based cellular connections, also called network connections. The SIM card sharing protocol ensures that only one connection is established at the same time for each SIM card.

The SIM card sharing protocol forwards the SIM card communication, so called Application Protocol Data Units (APDUs) from a device/UE that contains a SIM card to a device/UE that requires a SIM card and vice versa using the shared SIM card connection. The connection is a kind of logical connection from the UE with a SIM card to a UE with only a network connection, that utilizes the LAN connection. The reduction of required SIM cards in the LAN system leads to cost savings.

In a variant of the inventive system, the local area connection technology is IEEE-802.3 (Ethernet), IEEE-802.11 (WiFi), IEEE-802.15.4 (WPAN) and / or BT/BLE (Bluetooth/Bluetooth Low Energy).

And in a further variant of the inventive system, the local area connection technology is wired and / or wireless and / or meshed.

The advantage of using different local area connection technologies for the interconnection between the plurality of UEs in the LAN is that one can react to all circumstances and different UEs can be treated equally in the LAN. The invention can be used independently of the connection technology.

In another further variant of the inventive system, the local area connections form multi hop connections. This has the advantage that 'short' range connection technologies can be used to span large LANs. In other words, the size of the LAN is not limited by the maximum distance between individual nodes.

The object of the invention will also be solved by a method for SIM card sharing in a local area network (LAN), which is performed by the system according to the system claims, wherein only one connection at the same time for each SIM card is established, which is ensured by a SIM card sharing protocol, the method comprising the following steps:
- initiate a communication between UEs of the LAN by a UE, then
- forward application protocol data units by a SIM card sharing protocol via a logical shared SIM card connection from the UE that contains the SIM card to a UE that requires a SIM card to initiate a network connection with a base station of a cellular network.

The 3gpp based cellular standard allows only one active connection per SIM card. The SIM card sharing protocol ensures that only one connection is established at the same time for each SIM card.

Lower layer protocols (T=0 and T=1) are used to communicate via APDUs with the USIM application running at the SIM card. The communication is always command (C-APDU), response (R-APDU) based. The T=0 protocol is a byte-oriented protocol where a character is transmitted across the channel between the interface UE and the SIM card. The T=1 protocol is a block-oriented protocol where a block is transmitted across the channel between the interface UE and the SIM card. A block is a byte string conveyed in asynchronous characters. The communication is always initiated by the UE, the SIM card sharing protocol forwards the SIM card communication (APDUs) from a UE that contains a SIM card to a UE that requires a SIM card and vice versa. Real time behavior is not required.

The local area connections must be secured against eavesdropping to prevent the leaking of session keys of the cellular connection. Since the communication via the wired serial interface between UE and SIM card is not secured the local area network should at least provide the same level of security.

So, in a variant of the inventive method, the data which is exchanged between two UEs of the LAN is encrypted by a local area connection technology which is used between two UEs of the LAN.

Or, in another variant of the inventive method, the data which is exchanged between two UEs of the LAN is encrypted by the SIM card sharing protocol.

Hence, either encryption provided by the local area connection technology is used or the SIM card sharing protocol provides encryption of the forwarded APDUs.

The preferred variant is to use the encryption provided by the SIM card sharing protocol, because this ensures technology independence of the system.

In a further variant of the inventive method, an authentication mechanism is established between the UE that requires a SIM card and the UE that provides the SIM card, whereas the authentication mechanism is done by the local area connection technology or by the SIM card sharing protocol.

The UE that requires a SIM card and the UE that provides a SIM card must be trusting each other. Thus, an authentication mechanism is required. This can either be done by the local area connection technology or by the SIM card sharing protocol. Every state of the art authentication mechanism can be used, e. g. pre-shared keys or certificates.

Pursuant to a variant of the inventive method, the local area connection forwards application data to the UE with the best cellular connectivity. The method does not perform a finding of the UE with the best connectivity. Instead, the network can have multiple UEs, that have good cellular connectivity. These UEs need to be announced in the network, for example by the SIM card sharing protocol, and function as gateway.

The local area connection can be used to forward application data to the UE with the best cellular connectivity to increase the stability and reliability of the data communication via cellular connections.

The invention will be explained in more detail using exemplary embodiments.

The appended drawings show
Fig. 1 Local area network with a plurality of UEs according to the prior art, each UE require a UICC (SIM card);
Fig. 2 Local area network with a plurality of UEs according to the invention.

Figure 2 discloses schematically the inventive system forming a local area network 1. In the present example of the inventive system only one UE 2.1 of the plurality of UEs 2.1-2.4 comprises a SIM card 3 which is connected to the respective UE 2.1 via a wired serial interface. The plurality of UEs 2.1-2.4 are interconnected via a local area connection technology 5. The local area connections 5 are presented by solid lines. The local area connection technologies can be IEEE-802.3 (Ethernet), IEEE-802.11 (WiFi), IEEE-802.15.4 (WPAN) and / or BT/BLE (Bluetooth/Bluetooth Low Energy).

Only one active connection at the same time is establishable for each SIM card, which is ensured by a SIM card sharing protocol. The logical shared SIM card connection 7 is presented by a dotted line between two UEs 2.1 and 2.2. Exemplarily, for these two UEs 2.1 and 2.2, the SIM card sharing protocol forwards application protocol data units (APDU) from the UE 2.1 that contains the SIM card 3 to the UE 2.2 that requires a SIM card, so that the UE 2.2 can attach to the base station 4 of a cellular network. The dashed line presents the established connection 6 between the UE 2.2 without a SIM card and the base station 4, due to the handover of the SIM card features by the APDUs from the UE 2.1 containing the SIM card.

It is also possible that a few UEs of the LAN comprises a SIM card 3 but not all of the plurality of UEs in the LAN 1. The advantage of using more than one SIM card in the LAN is that more than one active connection 6 at the same time can be established in the LAN 1 with the base station 4.

In a preferred embodiment of the invention, the local area connection 5 forwards application data to the UE with the best cellular connectivity in order to increase the stability and reliability of the data communication via cellular connections.

### System and method for SIM card sharing in local area networks

### List of Reference Signs

- 1: Local area network
- 2.1 - 2.4: plurality of UEs in the LAN
- 3.1 - 3.4: SIM card
- 4: Base station
- 5: local area connection
- 6: 3GPP based cellular connection, network connection
- 7: logical tshared SIM card connection

## Claims

1. A system forming a local area network (1) comprises a plurality of user equipment (2), UEs, whereas only one UE of the plurality of UEs comprises or a few UEs of the plurality of UEs comprise a SIM card (3) connected to the respective UE via a wired serial interface and the plurality of UEs are interconnected via a local area connection technology (5), wherein only one active connection at the same time is establishable for each SIM card, which is ensured by a SIM card sharing protocol, wherein the SIM card sharing protocol forwards application protocol data units, APDUs, via a logical shared SIM card connection (7) from the UE (2.1) that contains the SIM card (3) to a UE (2.2) that requires a SIM card to attach via a network connection (6) to a base station (4) of a cellular network.

2. The system according to claim 1, wherein the local area connection technology (5) is IEEE-802.3 - Ethernet), IEEE-802.11 - WiFi, IEEE-802.15.4 - WPAN and / or BT/BLE - Bluetooth/Bluetooth Low Energy

3. The system according to claims 1 or 2, wherein the local area connection (5) technology is wired and / or wireless and / or meshed.

4. The system according to one of the claims 1 to 3, wherein the local area connections (5) form multi hop connections.

5. A method for SIM card sharing in a local area network (1), LAN, which is performed by the system according to claims 1 to 4, wherein only one connection at the same time for each SIM card (3) is established, which is ensured by a SIM card sharing protocol, the method comprising the following steps:
- initiate a communication between UEs (2) of the LAN (1) by a UE, then
- forward application protocol data units by a SIM card sharing protocol via a logical shared SIM card connection (7) from the UE (2.1) that contains the SIM card (1) to a UE (2.2) that requires a SIM card to initiate a network connection (6) with a base station (4) of a cellular network.

6. The method according to claim 5, wherein the data which is exchanged between two UEs (2.1, 2.2) of the LAN (1) is encrypted by a local area connection technology which is used between two UEs (2.1, 2.2) of the LAN (1) .

7. The method according to claim 5, wherein the data which is exchanged between two UEs (2.1, 2.2) of the LAN (1) is encrypted by the SIM card sharing protocol.

8. The method according to one of the claims 5 to 7, wherein an authentication mechanism is established between the UE (2.2) that requires a SIM card and the UE (2.1) that provides the SIM card (3.1), whereas the authentication mechanism is done by the local area connection (5) technology or by the SIM card sharing protocol (7).

9. The method according to one of the claims 5 to 8, wherein the local area connection forwards application data to the UE with the best cellular connectivity.
